# EUROPEAN PATENT SPECIFICATION

(11) **EP 3 199 420 B1**
(45) Date of publication and mention of the grant of the patent: **17.03.2021**
(21) Application number: 16854975.6
(22) Date of filing: 15.10.2016
(51) Int. Cl.: B61F 19/04

(54) **TELESCOPIC ENERGY-ABSORBING DEVICE FOR RAIL VEHICLE COLLISIONS**
TELESKOPISCHE ENERGIEABSORBIERENDE VORRICHTUNG FÜR SCHIENENFAHRZEUGKOLLISIONEN
DISPOSITIF D'ABSORPTION D'ÉNERGIE TÉLESCOPIQUE POUR COLLISIONS DE VÉHICULE FERROVIAIRE

(30) Priority: 16.10.2015 CN 201510666711
(43) Date of publication of application: 02.08.2017
(73) Proprietor: Central South University, Changsha, Hunan 410083 (CN)
(72) Inventor: GAO, Guangjun, Changsha Hunan 410083 (CN)
(74) Representative: White, Andrew John
(86) International application number: PCT/CN2016/102231
(87) International publication number: WO 2017/063600

(56) References cited:
- EP-A1- 1 247 716
- WO-A1-03/035452
- WO-A1-2015/015747
- CN-A- 102 107 664
- CN-A- 103 863 351
- CN-A- 104 925 080
- CN-U- 201 472 283
- CN-U- 201 989 738
- CN-U- 204 527 205
- CN-Y- 2 618 820
- CN-Y- 2 647 679
- FR-A1- 2 528 928
- US-A- 4 182 529
- US-A1- 2009 065 462

## Description

### TECHNICAL FIELD

The disclosure relates to the field of the passive safety of a rail vehicle, and in particular to an energy absorption device for use in a vehicle collision.

### BACKGROUND

With the development of the railway transportation and a continuous increase in the operating speed of rail vehicles, vehicle running safety has received increasing attention. Despite of an emergency braking is performed before a collision of a rail vehicle against an obstacle, collision accidents often arise because of the large inertia and the high speed of the rail vehicle. Once a collision accident occurs, it may cause disastrous effects resulting in damage of a rail vehicle and casualties. A countermeasure that has gained significant popularity all over the world lies in that an energy absorption structure is mounted at an end portion of the vehicle so that the energy absorption structure can absorb energy in case of a collision accident of a vehicle, thereby ensuring the safety of passengers and the vehicle.

Chinese utility model Publication No.CN201989738U entitled "Pneumatic Telescopic Type Collision-buffering Energy Absorption Device of Automobile" proposes a telescopic energy absorption structure which can slide back and forth in a casing. The energy absorption structure can be pushed out quickly and achieves a reliable self-locking. Upon a collision, the energy absorption structure suffers from collapse deformation to absorb the energy. When there is no collision, the energy absorption structure can be retracted by pulling out a self-locking bolt.

Chinese Patent Publication No.CN102107664A entitled "Vehicle Cutting Energy Absorption Device For Rail Locomotive" proposes a cutting energy absorption device in which: a test-piece to be cut is fixed and a cutter head is located on a cutter bar. When a collision is applied to the cutter bar, the cutter head cuts the test-piece to be cut to absorb the energy.

A collapse deformation is employed in the afore-described pneumatic telescopic type collision-buffering energy absorption device of automobile. Although the energy absorption structure is hidden within the casing before deformation and does not occupy the outer space, there may be a residual deformation after the collapse deformation of the energy absorption structure, this would make inefficient use of the deformation stroke.

Cutting energy absorption is employed in the afore-described vehicle cutting energy absorption device for rail locomotive. The energy absorption structure is exposed to an exterior of the energy absorption device and occupies the outer space, but the cutter bar may intrude into the interior of the energy absorption device, thus there is no residual deformation of the structure, and the deformation stroke is fully used.

Chinese Patent Publication No.CN104925080 A entitled "a stop beam of a monorail motor car and an anti-creeping energy-absorbing device thereof", proposes an anti-creeping energy-absorbing device.

There are also energy absorption structures which occupy a front space before the deformation and have residual deformation after the deformation.

To this end, the disclosure provides a telescopic type collision energy absorption device for a rail vehicle. An energy absorption element is hidden within the energy absorption device in normal times and does not occupy the outer space. When a collision occurs, the rapidly projected energy absorption structure employs cutting energy absorption and can be fully retracted into the interior of the energy absorption device, the residual deformation is not generated and the effective deformation stroke is fully used.

### SUMMARY

The invention is defined by the features of independent claim 1 and optional features in the dependent claims.

In order to improve the passive safety and aesthetic appearance of the rail vehicle, the disclosure provides a telescopic type collision energy absorption device for a rail vehicle exclusively used in the case of a collision of the rail vehicle. The device is hidden within vehicle when the vehicle is running normally and does not negatively impact the aesthetic properties of the vehicle; the energy absorption structure of the energy absorption device may project rapidly and absorb the energy when a collision occurs, there is no residual deformation generated in the collision, and the deformation stroke can be fully used.

A collapse type energy absorption structure fixed at an outer end of the vehicle is used in most of the existing locomotives and vehicles, which negatively impact the aesthetic properties of the vehicle. The curving performance of the vehicle is compromised in case of a longly projected energy absorption structure. Thus, the length of structure is limited. In this case, if the collapse type energy absorption structure which generates the residual deformation is used, the energy absorption ability of the structure will be compromised. Although there is an existing telescopic type energy absorption structure which does not compromise the aesthetic properties of the vehicle in normal times, it also use the collapse type energy absorption structure which may causes the residual deformation and compromises the energy absorption ability of the whole structure. The disclosure provides a telescopic type collision cutting energy absorption device for a rail vehicle, an energy absorption structure of which is hidden within vehicle in normal times and does not compromise the aesthetic properties of the vehicle. During a collision, the energy absorption structure can project sufficiently and produce no residual deformation, thereby fully using the deformation stroke thereof and improving the energy absorption ability of the structure effectively.

The technical solutions of the disclosure are implemented as follows.

There is provided a telescopic type collision energy absorption device for a rail vehicle, including: a first tube and a second tube that can telescope within the first tube, the first tube is mounted with a cutting mechanism for cutting an outer wall of the second tube, the energy absorption device includes a telescopic mechanism connected with the second tube by passing through the first tube,
when the energy absorption device is in a non-operating state, the telescopic mechanism pulls the second tube in such a way that the second tube is retracted into the interior of the first tube, in a state prior to the collision of the vehicle, the telescopic mechanism under the effect of a high-pressure air pushes the second tube in such a way that the second tube is ejected outwards, the cutting mechanism is pressed against locating slots of the second tube under the effect of a spring force, the cutting mechanism cuts the second tube and absorbs energy when the second tube is subjected to an external force and retracts towards the interior of the first tube; after the energy absorption circular tube is damaged by a collision, only the energy absorption structure is replaced during maintenance rather than replacement of the entire device; When subjecting to a certain vertical or lateral force, the energy absorption structure may occur a stable longitudinal deformation and move longitudinally along the guide cartridge.

The telescopic mechanism is driven by a double-acting type air cylinder.

The telescopic mechanism comprises the double-acting type air cylinder, a double-acting type solenoid valve, an air storage tank and a controller; in the non-operating state, the controller activates a second position of the double-acting type solenoid valve in such a way that a second position of the double-acting type air cylinder is inflated by the high-pressure air in the air storage tank via a gas circuit, such that the double-acting type air cylinder is in a state of tension where it pulls and retracts the second tube into the interior of the first tube; in the state prior to the collision of the vehicle, the controller activates a first position of the double-acting type solenoid valve in such a way that a first position of the double-acting type air cylinder is inflated by the high-pressure air in the air storage tank via a gas circuit, and the second tube is pushed by the double-acting type air cylinder under the effect of the high-pressure air and is ejected outwards.

In an embodiment, the cutting mechanism comprises cutters and a cutter base; in the non-operating state, the cutting mechanism is pressed against the outer wall of the second tube by the cutters; in the state prior to the collision of the vehicle, the cutters mounted on the cutter base are capable of rotating and separating from the second tube, such that the cutters are again pressed, under the effect of the spring force, against the locating slots of the second tube ejected outwards.

In an embodiment, the cutting mechanism further comprises cutter fixing blocks, bolts, torsional springs and pins, each cutter is connected with two of the cutter fixing blocks by one of the pins, a counter bore is provided on each of the cutter fixing blocks on one side of a pin bore, each torsional spring is wrapped around a corresponding pin, the torsional spring is connected at one end to the cutter and at other end to one of the two cutter fixing blocks, the cutters are pressed against the second tube by spring force of the torsional springs; the cutter fixing blocks are fixed on the cutter base by the bolts.

In an embodiment, each cutter is rotated and separated from the second tube by using a pull ring or an air cylinder below the cutter for jacking up the cutter; the pull ring is mounted on the cutter, the cutters on the cutter base can be rotated and separated from the second tube by being pulled through the pull rings, so as to allow a replacement of the cutters after being damaged.

In an embodiment, the first tube comprises a guide cartridge which is a hollow circular tube, the guide cartridge is provided at one end with a first flange part through which the guide cartridge is fixed to the cutter base, and the other end of the guide cartridge is connected to a base of the energy absorption device.

In an embodiment, an inner end of the second tube is provided with a second flange part, the cutter base is provided with a third flange part embedded within the first tube, the second flange part is in clearance fit with an inner wall of the first tube, the position of the second flange part is limited by the third flange part.

In an embodiment, an outer end of the second tube is provided with an anti-climber, an inner end of which is embedded in an inner chamber of the first tube, and the locating slots are provided on an outer wall in the second tube.

There is further provided a rail vehicle, the rail vehicle is mounted with the telescopic type collision energy absorption device for a rail vehicle according to any one of the above solutions, the energy absorption device is mounted on a rail vehicle driven by a high-pressure air of the rail vehicle itself or on a tool requiring energy absorption, which requires an additional provision of the high-pressure air; and the energy absorption device is automatically controlled by a sensor mounted on the rail vehicle, or controlled manually.

In a preferred embodiment of the rail vehicle, two sets of the energy absorption devices are provided on the rail vehicle, and the two sets of the energy absorption devices are mounted respectively on either side of an end portion of the vehicle.

The disclosure has the following beneficial effects: the telescopic type collision energy absorption device for a rail vehicle is hidden within the vehicle body when it does not work, and does not compromise the entirety aesthetic; when a collision occurs, the telescopic type collision energy absorption device for a rail vehicle may project rapidly, and absorb the energy by generating a large deformation, the deformation stroke of the structure can be fully used for absorbing the energy, the safety of the vehicles and passengers is ensured, an energy absorption structure of the telescopic type collision energy absorption device for a rail vehicle may also be retracted into the interior of the vehicle when the structure is triggered improperly. Furthermore, the device has a simple structure, is convenient to be replaced in case of damage, and can be controlled automatically.

### BRIEF DESCRIPTION OF THE DRAWINGS

The present disclosure will be further explained with reference to the drawings, in which:
Figure 1 is a structural schematic diagram of an energy absorption device according to the disclosure.
Figure 2 is an installation schematic diagram of a cutter structure of the disclosure.
Figure 3 is a top view of an energy absorption device according to the disclosure.
Figure 4 is a sectional view along a line A-A of Figure3.
Figure 5 is a principle diagram of the disclosure under a non-operating state.
Figure 6 is a principle diagram of the disclosure under an operating state.

### DETAILED DESCRIPTION

The objectives, solutions and advantages of embodiments of the disclosure will become clearer upon reading the following detail description of the solutions in the embodiments of the disclosure, given with reference to the accompanying drawings. The embodiments described herein are part of the embodiments of the disclosure but not all of the embodiments.

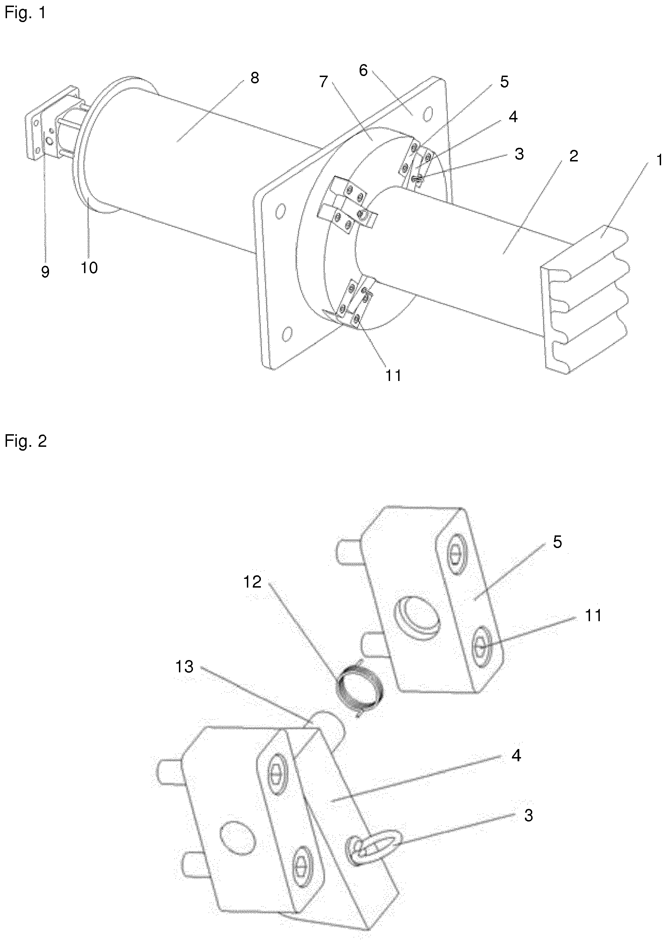

The disclosure proposes a telescopic type collision energy absorption device for a rail vehicle, which includes two sets of mechanisms functioning individually. The two sets of mechanisms are mounted respectively on either side of end portion of the vehicle. As shown in Figures 1 and 2, the mechanical structure of the energy absorption device includes an anti-climber 1, an energy absorption circular tube 2, pull rings 3, cutters 4, cutter fixing blocks 5, a mounting base 6, a cutter base 7, a guide cartridge 8, a double-acting type air cylinder 9, a rear base 10, bolts 11, torsional springs 12 and pins 13. The energy absorption device is mounted on a vehicle body by the mounting base 6 which is fixed on the vehicle body by bolts. The mounting base can be individually manufactured based on various different types of structures of the vehicle body, or can be previously mounted on the vehicle during manufacture of the vehicle. A base of the double-acting type air cylinder 9 is fixed on the vehicle body by bolts. The double-acting type air cylinder 9 may also be a double-acting type hydraulic cylinder, or is driven by an electric motor that drives a gear rack.

Each of the cutters 4 is connected with two of the cutter fixing blocks 5 through each of the pins 13. Counter bore is provided on each of the cutter fixing blocks 5 on the side of pin bore. Each torsional spring 12 is wrapped around a corresponding pin 13. The torsional spring 12 is connected at one end to the cutter 4 and at its other end to the cutter one of the two fixing blocks 5. The cutter installation structure is fixed on the cutter base by the bolts 11. The cutters 4 are tightly pressed against an outer wall of the energy absorption circular tube 2 by spring force of the torsional springs 12. Each pull ring 3 is mounted on a corresponding cutter 4. When mounting the energy absorption circular tube 2 or when the double-acting type air cylinder 9 pulls the energy absorption circular tube 2 to the interior of the guide cartridge 8, the energy absorption circular tube 2 may be separated from the cutters 4 by pulling the cutter 4 through the pull ring 3. Alternatively, an air cylinder for jacking up a cutter 4 may be mounted below the cutter 4 to separate the energy absorption circular tube 2 from the cutter 4. The cutters 4 mounted on the cutter base 7 are capable of rotating and separating from the energy absorption structure so that the cutters can be replaced after being damaged.

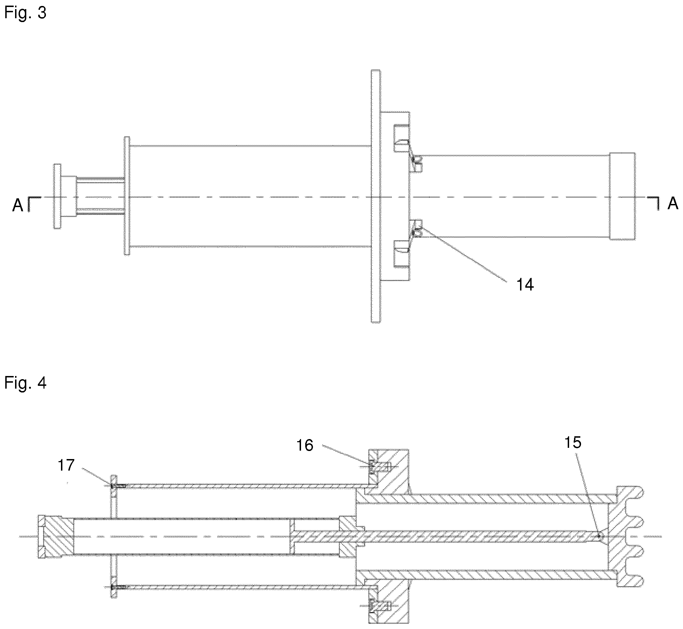

With reference to Figures 3 and 4, the mounting base 6 is connected to the cutter base 7 by bolts 16. One end of the guide cartridge 8 is welded on the cutter base 7 and the other end of the guide cartridge is connected to the base 10 by bolts 17. A piston end of the double-acting type air cylinder 9 is connected with the anti-climber 1 by pin 15. The anti-climber 1 is mounted at the front end of the energy absorption circular tube 2 mating with an inner hole of the cutter base 7, a rear end boss of the energy absorption circular tube is in clearance fit with the interior of the guide cartridge 8. The energy absorption circular tube 2 may move in a longitudinal direction. The energy absorption circular tube 2 and the guide cartridge 8 may be circular or other shapes so long as a clearance fit is provided between them. Locating slots 14 that are in clearance fit with the cutters 4 are provided on the energy absorption circular tube 2. The cutters 4 may be tightly pressed in the locating slots 14 after the projection of the energy absorption circular tube 2. The energy absorption circular tube 2 can be made of aluminium or steel. After the energy absorption circular tube 2 is damaged by a collision, the energy absorption structure may simply be replaced during maintenance, without having to replace the entire device. When subjecting to a certain vertical or lateral force, the energy absorption circular tube 2 may undergo a stable longitudinal deformation and move longitudinally along the guide cartridge 8.

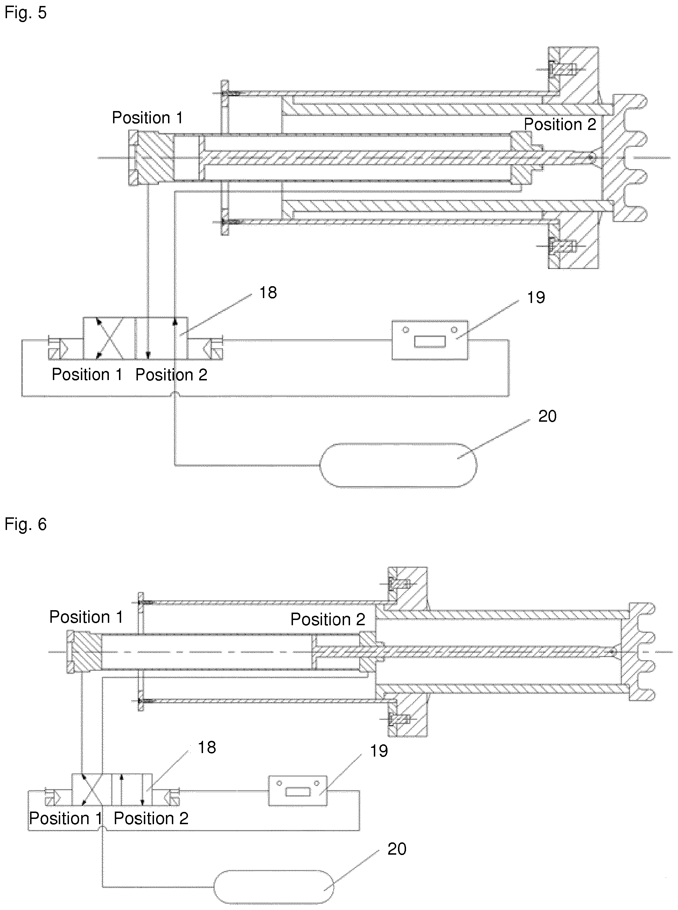

As shown in Figure 5, a control system of the energy absorption device includes a double-acting type solenoid valve 18, a controller 19 and an air storage tank 20. In a non-operating state, the high-pressure air already existing in the vehicle is used as a source power, the controller 19 activates a second position of the double-acting type solenoid valve 18, a second position of the double-acting type air cylinder 9 is inflated by the high-pressure air in the air storage tank 20 via a gas circuit, such that the double-acting type air cylinder 9 is in a state of tension where it pulls and hides the energy absorption circular tube 2 into the interior of the guide cartridge 8, the cutters 4 are pressed against the outer wall of the energy absorption circular tube 2.

As shown in Figure 6, before the collision of the vehicle, the controller 19 activates a first position of the double-acting type solenoid valve 18, a first position of the double-acting type air cylinder 9 is inflated by the high-pressure air in the air storage tank 20 via the gas circuit, the energy absorption circular tube 2 is pushed by the double-acting type air cylinder 9 under the effect of the high-pressure air and is ejected outwards, the cutters 4 are pressed against the locating slots 14 of the energy absorption circular tube 2 under the effect of spring force, the cutters 4 cut the energy absorption circular tube 2 and absorb the momentum of the collision when the energy absorption circular tube 2 is subjected to an external force and retracts towards the interior of the guide cartridge 8. When the energy absorption circular tube 2 is subjected to an external pressure, there is no air pressure in the second position of the double-acting type air cylinder 9. If the energy absorption circular tube 2 is not subjected to the collision after it projects, the energy absorption circular tube 2 may be separated from the cutters 4 by pulling of the cutters 4 by the double-acting type air cylinder 9 to the interior of the guide cartridge 8.

The energy absorption device may be mounted on the rail vehicle and driven by the high-pressure air of the vehicle itself, or it may be mounted on a tool that requires the energy absorption, but this requires an additional provision of the high-pressure air.

An automatic control of the entire structure of the energy absorption device may be achieved by sensors mounted on the vehicle, or a manual control of it may also be implemented.

## Claims

1. A telescopic type collision energy absorption device for a rail vehicle, wherein the energy absorption device comprises a first tube and a second tube that can telescope within the first tube, the first tube being mounted with a cutting mechanism for cutting an outer wall of the second tube, wherein the energy absorption device comprises a telescopic mechanism connected with the second tube by passing through the first tube, **characterized in that**
the telescopic mechanism is driven by a double-acting type air cylinder (9);
the telescopic mechanism comprises the double-acting type air cylinder (9), a double-acting type solenoid valve (18), an air storage tank (20) and a controller (19);
wherein the controller (19) of the telescopic mechanism is configured to: when the energy absorption device is in a non-operating state, activate a second position of the double-acting type solenoid valve (18) in such a way that a second position of the double-acting type air cylinder (9) is inflated by high-pressure air in the air storage tank (20) via a gas circuit;
wherein the double-acting type air cylinder (9) is configured to be in a state of tension, responsive to the second position of the double-acting type air cylinder (9) being inflated; and
wherein the controller (19) of the telescopic mechanism is further configured to pull the second tube in such a way that the second tube is retracted into the interior of the first tube, responsive to the double-acting type air cylinder (9) being in the state of tension; and
wherein the controller (19) of the telescopic mechanism is further configured to: when in a state prior to the collision of the vehicle, activate a first position of the double-acting type solenoid valve (18) in such a way that a first position of the double-acting type air cylinder (9) is inflated by the high-pressure air in the air storage tank (20) via the gas circuit;
wherein the double-acting type air cylinder (9) is configured to push the second tube in such a way that the second tube is ejected outwards, responsive to the first position of the double-acting type air cylinder (9) being inflated;
the cutting mechanism is configured to be pressed against locating slots (14) of the second tube under the effect of a spring force, responsive to the second tube being ejected outwards;
the double-acting type air cylinder (9) is further configured to: when the second tube is not subjected to the collision after it projects, pull the second tube to the interior of the first tube; and
the cutting mechanism is further configured to: when the second tube is subjected to an external force after it projects and retracts towards the interior of the first tube, cut the second tube and absorb energy.

2. The telescopic type collision energy absorption device for a rail vehicle according to claim 1, wherein the cutting mechanism comprises cutters (4) and a cutter base (7); in the non-operating state, the cutting mechanism is pressed against the outer wall of the second tube by the cutters (4); in the state prior to the collision of the vehicle, the cutters (4) mounted on the cutter base (7) are capable of rotating and separating from the second tube, such that the cutters (4) are again pressed, under the effect of the spring force, against the locating slots (14) of the second tube ejected outwards.

3. The telescopic type collision energy absorption device for a rail vehicle according to claim 2, wherein the cutting mechanism further comprises cutter fixing blocks (5), bolts (11), torsional springs (12) and pins (13), each cutter (4) is connected with two of the cutter fixing blocks (5) by one of the pins (13), a counter bore is provided on each of the two cutter fixing blocks (5) on one side of a pin bore, each torsional spring (12) is wrapped around a corresponding pin (13), the torsional spring (12) is connected at one end to the cutter (4) and at other end to one of the two cutter fixing blocks (5), the cutters (4) are pressed against the second tube by spring force of the torsional springs (12); the cutter fixing blocks (5) are fixed on the cutter base (7) by the bolts (11).

4. The telescopic type collision energy absorption device for a rail vehicle according to claim 3, wherein each cutter (4) is rotated and separated from the second tube by a pull ring (3) or an air cylinder below the cutter (4) for jacking up the cutter (4); the pull ring (3) is mounted on the cutter (4), the cutter (4) can be separated from the second tube by being pulled through the pull ring (3).

5. The telescopic type collision energy absorption device for a rail vehicle according to claim 2, wherein the first tube comprises a guide cartridge (8) which is a hollow circular tube, the guide cartridge (8) is provided at one end with a first flange part through which the guide cartridge (8) is fixed to the cutter base (7), and the other end of the guide cartridge (8) is connected to a base (10) of the energy absorption device.

6. The telescopic type collision energy absorption device for a rail vehicle according to claim 5, wherein an inner end of the second tube is provided with a second flange part, the cutter base (7) is provided with a third flange part embedded within the first tube, the second flange part is in clearance fit with an inner wall of the first tube, the position of the second flange part is limited by the third flange part.

7. The telescopic type collision energy absorption device for a rail vehicle according to one of claims 1-6, wherein an outer end of the second tube is provided with an anti-climber (1), an inner end of which is embedded in an inner chamber of the first tube, and the locating slots (14) are provided on an outer wall of the inner end of the second tube.

8. A rail vehicle, **characterized in that** the rail vehicle is mounted with the telescopic type collision energy absorption device for a rail vehicle according to one of claims 1-7, the energy absorption device is mounted on a rail vehicle driven by a high-pressure air of the rail vehicle itself, or on a tool requiring energy absorption, which requires an additional provision of the high-pressure air; and the energy absorption device is automatically controlled by a sensor mounted on the rail vehicle, or controlled manually.

9. The rail vehicle according to claim 8, wherein two sets of the energy absorption devices are provided on the rail vehicle, and the two sets of the energy absorption devices are mounted respectively on either side of an end portion of the vehicle.

## Patentansprüche

1. Teleskopische Kollisions-Energieabsorptionsvorrichtung für ein Schienenfahrzeug, wobei die Energieabsorptionsvorrichtung ein erstes Rohr und ein zweites Rohr umfasst, das innerhalb des ersten Rohrs teleskopierbar ist, wobei das erste Rohr mit einem Schneidmechanismus zum Schneiden einer Außenwand des zweiten Rohrs montiert ist, wobei die Energieabsorptionsvorrichtung einen Teleskopmechanismus umfasst, der mit dem zweiten Rohr verbunden ist, indem er durch das erste Rohr hindurchgeht, **dadurch gekennzeichnet, dass**
der Teleskopmechanismus von einem doppeltwirkenden Luftzylinder (9) angetrieben wird;
der Teleskopmechanismus den Luftzylinder (9) vom doppeltwirkenden Typ, ein Magnetventil (18) vom doppeltwirkenden Typ, einen Luftspeichertank (20) und einen Controller (19) umfasst;
wobei die Steuerung (19) des Teleskopmechanismus so konfiguriert ist, dass sie, wenn sich die Energieabsorptionsvorrichtung in einem Nichtbetriebszustand befindet, eine zweite Position des Magnetventils (18) vom doppeltwirkenden Typ so aktiviert, dass eine zweite Position des Luftzylinders (9) vom doppeltwirkenden Typ durch Hochdruckluft in dem Luftspeicher (20) über einen Gaskreislauf aufgepumpt wird;
wobei der Luftzylinder (9) des doppeltwirkenden Typs so konfiguriert ist, dass er sich in einem Spannungszustand befindet, der auf die zweite Position des Luftzylinders (9) des doppeltwirkenden Typs, der aufgeblasen wird, reagiert; und
wobei die Steuerung (19) des Teleskopmechanismus ferner so konfiguriert ist, dass sie das zweite Rohr so zieht, dass das zweite Rohr in das Innere des ersten Rohrs zurückgezogen wird, als Reaktion darauf, dass sich der Luftzylinder (9) des doppelt wirkenden Typs in dem Spannungszustand befindet; und
wobei die Steuereinheit (19) des Teleskopmechanismus ferner so konfiguriert ist, dass sie: in einem Zustand vor der Kollision des Fahrzeugs eine erste Position des Magnetventils (18) vom doppeltwirkenden Typ so aktiviert, dass eine erste Position des Luftzylinders (9) vom doppeltwirkenden Typ durch die Hochdruckluft im Luftspeicher (20) über den Gaskreislauf aufgeblasen wird;
wobei der Luftzylinder (9) des doppelt wirkenden Typs so konfiguriert ist, dass er den zweiten Schlauch so drückt, dass der zweite Schlauch nach außen ausgestoßen wird, als Reaktion auf die erste Position des Luftzylinders (9) des doppelt wirkenden Typs, der aufgeblasen wird;
wobei der Schneidemechanismus so konfiguriert ist, dass er unter der Wirkung einer Federkraft gegen Fixierschlitze (14) des zweiten Rohrs gedrückt wird, wenn das zweite Rohr nach außen ausgestoßen wird;
der Luftzylinder (9) des doppeltwirkenden Typs ist ferner so konfiguriert, dass er: wenn das zweite Rohr nach seinem Vorstehen nicht der Kollision ausgesetzt ist, das zweite Rohr in das Innere des ersten Rohrs zieht; und
der Schneidemechanismus ist ferner so konfiguriert, dass er: wenn das zweite Rohr einer äußeren Kraft ausgesetzt wird, nachdem es in das Innere des ersten Rohrs vorsteht und sich zurückzieht, das zweite Rohr durchtrennt und Energie absorbiert.

2. Teleskopartige Kollisions-Energieabsorptionsvorrichtung für ein Schienenfahrzeug nach Anspruch 1, wobei der Schneidmechanismus aus Messern (4) und einer Messerbasis (7) besteht; wobei im Ruhezustand der Schneidmechanismus von den Messern (4) gegen die Außenwand des zweiten Rohres gedrückt wird; im Zustand vor der Kollision des Fahrzeugs die an der Messerbasis (7) angebrachten Messer (4) drehbar sind und sich von dem zweiten Rohr trennen können, so dass die Messer (4) unter der Wirkung der Federkraft wieder gegen die Aufnahmeschlitze (14) des nach außen geschleuderten zweiten Rohrs gedrückt werden.

3. Teleskopische Kollisions-Energieabsorptionsvorrichtung für ein Schienenfahrzeug nach Anspruch 2, wobei der Schneidmechanismus weiterhin Schneidwerkzeug-Befestigungsblöcke (5), Bolzen (11), Torsionsfedern (12) und Stifte (13) umfasst, jedes Schneidwerkzeug (4) mit zwei der Schneidwerkzeug-Befestigungsblöcke (5) durch einen der Stifte (13) verbunden ist, an jedem der beiden Messerbefestigungsblöcke (5) auf einer Seite einer Stiftbohrung eine Senkbohrung vorgesehen ist, jede Torsionsfeder (12) um einen entsprechenden Stift (13) gewickelt ist, die Torsionsfeder (12) an einem Ende mit dem Messer (4) und am anderen Ende mit einem der beiden Messerbefestigungsblöcke (5) verbunden ist, die Messer (4) durch die Federkraft der Torsionsfedern (12) gegen das zweite Rohr gedrückt werden; und die Messerbefestigungsblöcke (5) durch die Bolzen (11) an der Messerbasis (7) befestigt sind.

4. Teleskopische Kollisions-Energieabsorptionsvorrichtung für ein Schienenfahrzeug nach Anspruch 3, wobei jede Schneide (4) durch einen Zugring (3) oder einen Luftzylinder unterhalb der Schneide (4) zum Aufbocken der Schneide (4) gedreht und von dem zweiten Rohr getrennt wird; der Zugring (3) ist an der Schneide (4) angebracht, die Schneide (4) kann von dem zweiten Rohr getrennt werden, indem sie durch den Zugring (3) gezogen wird.

5. Teleskopische Kollisions-Energieabsorptionsvorrichtung für ein Schienenfahrzeug nach Anspruch 2, wobei das erste Rohr eine Führungspatrone (8) umfasst, die ein hohles kreisförmiges Rohr ist, die Führungspatrone (8) an einem Ende mit einem ersten Flanschteil versehen ist, durch das die Führungspatrone (8) an der Schneidebasis (7) befestigt ist, und das andere Ende der Führungspatrone (8) mit einer Basis (10) der Energieabsorptionsvorrichtung verbunden ist.

6. Teleskopische Kollisions-Energieabsorptionsvorrichtung für ein Schienenfahrzeug nach Anspruch 5, wobei ein inneres Ende des zweiten Rohrs mit einem zweiten Flanschteil versehen ist, die Schneidebasis (7) mit einem dritten Flanschteil versehen ist, das in das erste Rohr eingebettet ist, das zweite Flanschteil in Spielpassung mit einer Innenwand des ersten Rohrs ist und die Position des zweiten Flanschteils durch das dritte Flanschteil begrenzt ist.

7. Teleskopische Kollisions-Energieabsorptionsvorrichtung für ein Schienenfahrzeug nach einem der Ansprüche 1 bis 6, wobei ein äußeres Ende des zweiten Rohrs mit einem Anti-Kletterer (1) versehen ist, dessen inneres Ende in eine innere Kammer des ersten Rohrs eingebettet ist, und die Fixierschlitze (14) an einer Außenwand des inneren Endes des zweiten Rohrs vorgesehen sind.

8. Schienenfahrzeug, **dadurch gekennzeichnet, dass** das Schienenfahrzeug mit der teleskopartigen Kollisions-Energieabsorptionsvorrichtung für ein Schienenfahrzeug nach einem der Ansprüche 1-7 ausgerüstet ist, die Energieabsorptionsvorrichtung an einem Schienenfahrzeug, das durch eine Hochdruckluft des Schienenfahrzeugs selbst angetrieben wird, oder an einem Werkzeug, das eine Energieabsorption erfordert, die eine zusätzliche Bereitstellung der Hochdruckluft erfordert, angebracht ist; und die Energieabsorptionsvorrichtung automatisch durch einen am Schienenfahrzeug angebrachten Sensor gesteuert oder manuell gesteuert wird.

9. Schienenfahrzeug nach Anspruch 8, wobei zwei Sätze der Energieabsorptionsvorrichtungen an dem Schienenfahrzeug vorgesehen sind und die beiden Sätze der Energieabsorptionsvorrichtungen jeweils auf beiden Seiten eines Endabschnitts des Fahrzeugs angebracht sind.

## Revendications

1. Dispositif d'absorption d'énergie de collision de type télescopique pour un véhicule ferroviaire, le dispositif d'absorption d'énergie comprenant un premier tube et un deuxième tube qui peut effectuer un mouvement télescopique au sein du premier tube, le premier tube étant monté avec un mécanisme de coupe pour couper une paroi externe du deuxième tube, le dispositif d'absorption d'énergie comprenant un mécanisme télescopique raccordé au deuxième tube du fait qu'il passe à travers le premier tube, **caractérisé en ce que**
le mécanisme télescopique est entraîné par un cylindre pneumatique de type à double action (9) ;
le mécanisme télescopique comprend le cylindre pneumatique de type à double action (9), une soupape à solénoïde de type à double action (18), un réservoir de stockage d'air (20) et un organe de commande (19) ;
dans lequel l'organe de commande (19) du mécanisme télescopique est configuré pour : lorsque le dispositif d'absorption d'énergie est dans un état non opérationnel, activer une deuxième position de la soupape à solénoïde de type à double action (18) de telle sorte qu'une deuxième position du cylindre pneumatique de type à double action (9) soit gonflée par de l'air à haute pression dans le réservoir de stockage d'air (20) via un circuit de gaz ;
dans lequel le cylindre pneumatique de type à double action (9) est configuré pour être dans un état de tension, en réaction au fait que la deuxième position du cylindre pneumatique de type à double action (9) est gonflé ; et
dans lequel l'organe de commande (19) du mécanisme télescopique est configuré en outre pour tirer sur le deuxième tube de telle sorte que le deuxième tube soit rétracté jusque dans l'espace intérieur du premier tube, en réaction au fait que le cylindre pneumatique de type à double action (9) est dans l'état de tension ; et
dans lequel l'organe de commande (19) du mécanisme télescopique est configuré en outre pour : lorsqu'il est dans un état antérieur à la collision du véhicule, activer une première position de la soupape à solénoïde du type à double action (18) de telle sorte qu'une première position du cylindre pneumatique de type à double action (9) soit gonflée par l'air à haute pression dans le réservoir de stockage d'air (20) via le circuit de gaz ;
dans lequel le cylindre pneumatique de type à double action (9) est configuré pour pousser le deuxième tube de telle sorte que le deuxième tube soit éjecté vers l'extérieur, en réaction au fait que la première position du cylindre pneumatique de type à double action (9) est gonflée ;
le mécanisme de coupe est configuré pour être pressé contre des fentes de localisation (14) du deuxième tube sous l'effet d'une force de ressort, en réaction au fait que le deuxième tube est éjecté vers l'extérieur ;
le cylindre pneumatique de type à double action (9) est configuré en outre pour : lorsque le deuxième tube n'est pas soumis à la collision après qu'il se soit mis en saillie, tirer le deuxième tube jusque vers l'espace intérieur du premier tube ; et
le mécanisme de coupe est configuré en outre pour : lorsque le deuxième tube est soumis à une force externe après qu'il se soit mis en saillie et se soit rétracté vers l'espace intérieur du premier tube, couper le deuxième tube et absorber l'énergie.

2. Dispositif d'absorption d'énergie de collision de type télescopique pour un véhicule ferroviaire selon la revendication 1, dans lequel le mécanisme de coupe comprend des organes de coupe (4) et une base d'organes de coupe (7) ; dans l'état non opérationnel, le mécanisme de coupe est pressé contre la paroi externe du deuxième tube par les organes de coupe (4) ; dans l'état préalable à la collision du véhicule, les organes de coupe (4) montés sur la base d'organes de coupe (7) sont aptes à tourner et à se séparer du deuxième tube, de telle sorte que les organes de coupe (4) soient de nouveau pressés, sous l'effet de la force de ressort, contre les fentes de localisation (14) du deuxième tube éjecté vers l'extérieur.

3. Dispositif d'absorption d'énergie de collision de type télescopique pour un véhicule ferroviaire selon la revendication 2, dans lequel le mécanisme de coupe comprend en outre des blocs de fixation d'organe de coupe (5), des boulons (11), des ressorts de torsion (12) et des broches (13), chaque organe de coupe (4) étant raccordé à deux des blocs de fixation d'organe de coupe (5) par l'une des broches (13), un contre-alésage étant prévu sur chacun des deux blocs de fixation d'organe de coupe (5) sur un côté d'un alésage de broche, chaque ressort de torsion (12) étant enroulé autour d'une broche correspondante (12), le ressort de torsion (12) étant raccordé au niveau d'une extrémité à l'organe de coupe (4) et au niveau d'une autre extrémité à l'un des deux blocs de fixation d'organe de coupe (5), les organes de coupe (4) étant pressés contre le deuxième tube par la force de ressort des ressorts de torsion (12) ; les blocs de fixation d'organe de coupe (5) étant fixés sur la base d'organes de coupe (7) par les boulons (11).

4. Dispositif d'absorption d'énergie de collision de type télescopique pour un véhicule ferroviaire selon la revendication 3, dans lequel chaque organe de coupe (4) est tourné et séparé du deuxième tube par un anneau de traction (3) ou un cylindre pneumatique sous l'organe de coupe (4) pour relever l'organe de coupe (4) ; l'anneau de traction (3) est monté sur l'organe de coupe (4), l'organe de coupe (4) pouvant être séparé du deuxième tube du fait qu'il est tiré à travers l'anneau de traction (3).

5. Dispositif d'absorption d'énergie de collision de type télescopique pour un véhicule ferroviaire selon la revendication 2, dans lequel le premier tube comprend une cartouche de guidage (8) qui est un tube circulaire creux, la cartouche de guidage (8) étant pourvue au niveau d'une extrémité d'une première partie bride à travers laquelle la cartouche de guidage (8) est fixée à la base d'organes de coupe (7), et l'autre extrémité de la cartouche de guidage (8) est raccordée à une base (10) du dispositif d'absorption d'énergie.

6. Dispositif d'absorption d'énergie de collision de type télescopique pour un véhicule ferroviaire selon la revendication 5, dans lequel une extrémité interne du deuxième tube est pourvue d'une deuxième partie bride, la base d'organes de coupe (7) est pourvue d'une troisième partie bride intégrée au sein du premier tube, la deuxième partie bride étant en ajustement avec dégagement avec une paroi interne du premier tube, la position de la deuxième partie bride étant limitée par la troisième partie bride.

7. Dispositif d'absorption d'énergie de collision de type télescopique pour un véhicule ferroviaire selon l'une des revendications 1-6, dans lequel une extrémité externe du deuxième tube est pourvue d'un anti-grimpant (1), dont une extrémité est intégrée dans une chambre interne du premier tube, et les fentes de localisation (14) sont prévues sur une paroi externe de l'extrémité interne du deuxième tube.

8. Véhicule ferroviaire, **caractérisé en ce que** le véhicule ferroviaire est monté avec le dispositif d'absorption d'énergie de collision de type télescopique pour un véhicule ferroviaire selon l'une des revendications 1-7, le dispositif d'absorption d'énergie étant monté sur un véhicule ferroviaire entraîné par un air à haute pression du véhicule ferroviaire lui-même, ou sur un outil nécessitant une absorption d'énergie, qui nécessite un approvisionnement additionnel de l'air à haute pression ; et le dispositif d'absorption d'énergie est commandé automatiquement par un capteur monté sur le véhicule ferroviaire, ou est commandé manuellement.

9. Véhicule ferroviaire selon la revendication 8, dans lequel deux ensembles des dispositifs d'absorption d'énergie sont prévus sur le véhicule ferroviaire, et les deux ensembles des dispositifs d'absorption d'énergie étant montés respectivement sur chaque côté d'une portion d'extrémité du véhicule.
